**Europäisches Patentamt**

(19) **European Patent Office**

**Office européen des brevets**

(11) **EP 0 680 800 B1**

(12) # EUROPEAN PATENT SPECIFICATION

(45) Date of publication and mention
of the grant of the patent:
**22.04.1998 Bulletin 1998/17**

(21) Application number: **94927102.7**

(22) Date of filing: **27.09.1994**

(51) Int. Cl.$^6$: **B23H 7/02**, B23H 7/10

(86) International application number:
**PCT/JP94/01580**

(87) International publication number:
**WO 95/09063 (06.04.1995 Gazette 1995/15)**

(54) **METHOD FOR AUTOMATICALLY ADJUSTING THE GAP OF AN UPPER NOZZLE FOR A WIRE ELECTRIC DISCHARGE MACHINE**

VERFAHREN ZUM AUTOMATISCHEN ABSTANDSEINSTELLUNG DER OBEREN DÜSE EINER DRAHTSCHNEIDEFUNKENEROSIONSMASCHINE

PROCEDE POUR REGLER AUTOMATIQUEMENT L'ECARTEMENT D'UN AJUTAGE SUPERIEUR POUR MACHINE D'ETINCELAGE

(84) Designated Contracting States:
**CH DE LI**

(30) Priority: **28.09.1993 JP 263072/93**

(43) Date of publication of application:
**08.11.1995 Bulletin 1995/45**

(73) Proprietor: **FANUC LTD.**
**Minamitsuru-gun, Yamanashi 401-05 (JP)**

(72) Inventors:
* **KITA, Yuki,**
**Fanuc Manshonharimomi,**
**Room 10-203**
**Yamanashi 401-05 (JP)**

* **ITO, Masaya,**
**Fanuc Dai-3 Vira-karamatsu**
**Yamanashi 401-05 (JP)**
* **FUJITA, Minoru,**
**Fanuc Dai-3 Vira-karamatsu**
**Yamanashi 401-05 (JP)**

(74) Representative:
**Billington, Lawrence Emlyn et al**
**Haseltine Lake & Co.,**
**Imperial House,**
**15-19 Kingsway**
**London WC2B 6UD (GB)**

(56) References cited:
**EP-A- 0 464 211**            **JP-A- 3 136 722**
**JP-A-63 288 623**           **JP-B- 3 002 611**

## Description

This invention generally relates to a wire discharge processing machine, and more particularly to a method, in a wire discharge processing machine, for automatically adjusting a nozzle clearance between an upper nozzle of a wire discharge processing machine and a workpiece.

For the machining of workpieces, a wire of the wire discharge processing machine generally, but not essentially, passes along the following path. The wire is first pulled out from a supply reel installed on a column, and then reaches a workpiece through a brake roller and an upper nozzle. Then, the wire acts to apply discharge to the workpiece. Subsequently, after finishing discharge machining operations, a used wire is sent through a lower guide to a lower arm, and passes through the inside of the lower arm until it reaches a feed roller.

The wire discharge processing machine includes a numerically controlled apparatus (CNC apparatus). The numerically controlled apparatus executes tension control and feed speed control of the wire, or shift control of a workpiece in the X-axis and Y-axis directions.

The upper nozzle, connected to a machining fluid supply port, injects machining fluid downward in wire-cut machining operations and automatic wire connecting operations.

The machining fluid supplied from the upper nozzle maintains a discharge gap during machining operations (the discharge gap is an adequate clearance to be kept between a wire and a workpiece for maintaining arc discharge), or cools down discharged portions, or removes sludge produced by machining operations.

The upper nozzle clearance is defined as a clearance between the upper nozzle and the workpiece. To supply machining fluid adequately from the upper nozzle, this upper nozzle clearance needs to be set at an adequate distance.

Regarding the size of the upper nozzle clearance, the sludge produced in the machining operations can be effectively removed with reducing length of the upper nozzle clearance. When the machining conditions need to be identical to individual workpieces, it is desirable that the length of the upper nozzle clearance is maintained at a constant value.

The settings of the upper nozzle clearance has been conventionally done by using a gauge in the following manner. That is, a clearance between the upper nozzle and the workpiece is measured by inserting a clearance gauge therebetween at an edge of the upper nozzle closest to the workpiece. Monitoring a measured result, a Z-axis quill shaft supporting the upper nozzle is manually adjusted in the Z-axis direction so that the clearance can be equalized to a desired value.

However, the above-described conventional nozzle clearance adjusting method requires the same adjusting operation whenever workpieces to be machined are exchanged or in the wire connecting operations, the adjusting operation again forcing us to measure a clearance between the upper nozzle and a workpiece by inserting the clearance gauge therebetween and adjust the nozzle clearance based on a measured result. Such an adjusting operation elongates the overall working time unwantedly, and lowers work efficiency. Furthermore, as the above-described adjustment mandatorily requires manual operations, there is a problem that automation of the upper nozzle clearance adjustment is difficult.

Moreover, as the clearance gauge is only effective to measure a predetermined clearance size, the clearance gauge cannot be used for measurements of arbitrary clearances other than that size.

One attempt to provide automatic nozzle clearance adjustment is disclosed in JP-A-61-90828, according to the preamble of attached claim 1. The nozzle construction is, however, extremely complex.

A principal object of the present invention is to provide a method for automatically adjusting the upper nozzle clearance of a wire discharge processing machine without requiring manual measurements using a clearance gauge or the like.

Another object of the present invention is to provide a method for automatically adjusting the upper nozzle clearance of a wire discharge processing machine which does not require the measurement of a clearance between the upper nozzle and a workpiece by use of a clearance gauge. Still another object of the present invention is to provide a method for automatically adjusting the upper nozzle clearance of a wire discharge processing machine capable of reducing working time and improving work efficiency. Yet another object of the present invention is to provide an adjusting method realizing an automatic adjustment requiring no manual operations.

Still another object of the present invention is to provide a method for automatically adjusting the upper nozzle clearance of a wire discharge processing machine, which enables us to set a clearance between the upper nozzle and the workpiece at an arbitrary value.

A wire discharge processing machine employing the method of automatically adjusting an upper nozzle clearance of the present invention is a wire discharge processing machine comprising an upper nozzle installed on a Z axis driven by a servomotor and a wire passing through the upper nozzle.

The Z axis of the wire discharge processing machine is driven by the servomotor, and the drive control system of the servomotor comprises a disturbance estimation observer. The disturbance estimation observer estimates a disturbance load applied on the upper nozzle or on a portion fixed relative thereto. According to the method of automatically adjusting the upper nozzle clearance in accordance with the present invention, the disturbance estimation observer estimates a disturbance load applied on the upper nozzle or said portion. Collision occurring between the upper nozzle or said portion and a reference point defined on the wire discharge processing machine is detected on the basis of thus estimated disturbance load.

Then, the control system incorporating the disturbance estimation observer, when it detects the collision between the upper nozzle or said portion and the reference point, stops the servomotor and positions the upper nozzle at the reference position.

Then, the control system, after positioning the upper nozzle at the reference position, raises the Z axis by a set value corresponding to an upper nozzle clearance. With the shift movement of the upper nozzle in the Z direction, the position of the upper nozzle is determined with respect to the reference position, thereby adjusting a clearance of the upper nozzle so as to be equalized to an arbitrarily determined value.

A disturbance estimation observer has been disclosed in EP-A-0 464 211.

Furthermore, the control system, when machining fluid is supplied into the upper nozzle, may execute the positioning control of the upper nozzle with reference to the reference position by comparing a disturbance load value estimated by the disturbance estimation observer with the set value obtained in advance.

In the present invention, the reference position is defined on a specific portion of the wire discharge processing machine whose position is stationary irrespective of the shift movement of the upper nozzle. The reference position is, for example, defined on a workpiece or a table.

Furthermore, in the present invention, the collision between the upper nozzle or said portion and the reference position can be detected by judging the largeness of an estimated disturbance load value obtained by the disturbance estimation observer. For example, when the estimated disturbance load value obtained by the disturbance estimation observer is not smaller than the set value, it is judged that the upper nozzle or said portion collides with the reference position.

BRIEF DESCRIPTION OF DRAWINGS

Fig. 1 is a block diagram showing an example of an arrangement embodying the method of the present invention;
Fig. 2 is a block diagram showing a disturbance estimation observer used in the embodiment of the present invention;
Fig. 3 is a block diagram showing a servomotor control system;
Fig. 4 is a block diagram showing a model constituting the disturbance estimation observer;
Fig. 5 is a flow chart illustrating a method in accordance with the present invention;
Fig. 6 is a view showing the positional relationship between an upper nozzle and a reference position;
Fig. 7 is a flow chart illustrating the processing of a processor of a digital servo, executed every cycle of the position & speed loop processing; and
Fig. 8 is a flow chart illustrating operation of a second embodiment of the present invention.

(Arrangement for Embodying the Present Invention)

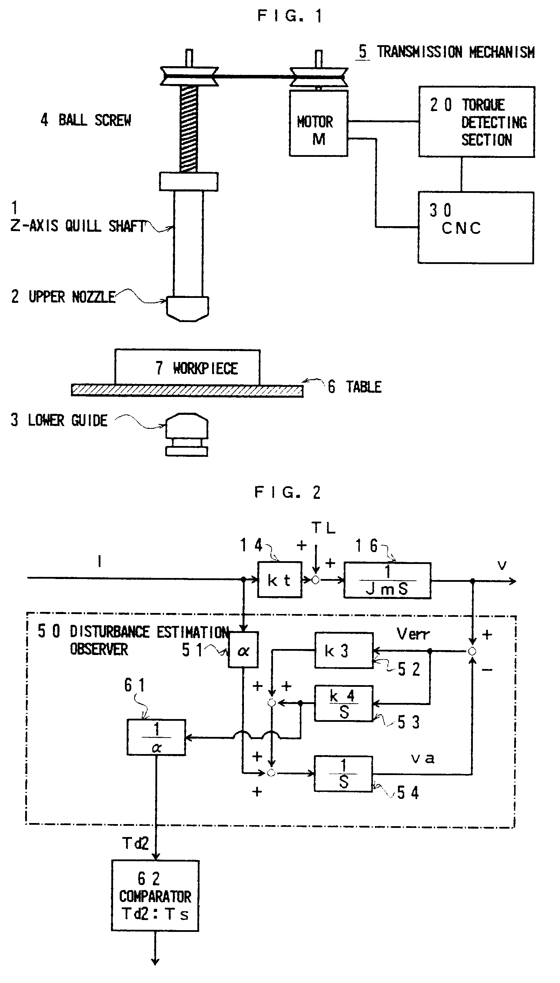

First, one example of an arrangement for embodying a method for automatically adjusting the upper nozzle clearance of a wire discharge processing machine in accordance with the present invention will be explained with reference to the block diagram of Fig. 1. The block diagram of Fig. 1 shows only part of the wire discharge processing machine.

In Fig. 1, a Z-axis quill shaft 1 is a member for guiding a wire to an upper nozzle 2, the wire being fed forward from a wire feed section (both the wire and the wire feed section are not shown). For example, the Z-axis quill shaft can be made by pipe structure, although it is not limited to the pipe structure.

The Z-axis quill shaft 1, equipped with a ball screw 4, is shiftable in the Z-axis direction by rotating the ball screw 4. When the Z-axis quill shaft 1 shifts in the Z-axis direction, adjusted is a distance between an end surface of the upper nozzle 2 attached at the distal end of the Z-axis quill shaft 1 and a table 6 or a workpiece 7.

This ball screw 4 is connected via a transmission mechanism 5 to a motor M, which generates rotational drive force. The transmission mechanism 5 is not a compulsory element for shifting the upper nozzle 2. For example, the rotational force of the motor M can be directly transmitted to the ball screw 4, so as to drive the Z-axis quill shaft 1 and the upper nozzle 2.

The upper nozzle 2 not only guides the fed wire toward the workpiece 7 but also supplies machining fluid to a processing portion of the workpiece 7 machined by discharge. By supply the machining fluid, sludge produced from the machined portion can be removed and the machined portion can be cooled down.

A lower guide 3 is provided at a position confronting the upper nozzle 2. The lower guide 3 not only guides the wire to a wire take-up section (not shown), but supplies machining fluid to the discharge machined portion of the workpiece 7, thereby removing sludge produced from the machined portion and cooling down the machined portion.

The workpiece 7, to be machined by discharge, is interposed between the upper nozzle 2 and the lower guide 3.

The placement of the workpiece 7 is accomplished by setting the workpiece 7 onto the table 6. The setting is accomplished by fixing the workpiece 7 onto a workpiece base by a clamp (both the workpiece base and the clamp are not shown in the drawing).

The table 6 is shiftable in any of X-axis, Y-axis, U-axis, and V-axis directions. By controlling the shift amount of the table 6 in each axis direction, the table 6 can be moved in the X-axis direction or the Y-axis direction and also the inclination angle of the workpiece 7 can be changed.

The shift movement of each axis is controlled by moving a shifting shaft provided on each axis by a motor (not shown).

In the present invention, control of the motor M driving the Z-axis quill shaft 1 and control of other motors driving other shifting shafts are executed by a numerically controlled apparatus (CNC) 30. A torque value of the motor M is detected by a torque detecting section 20. The detected torque value is sent to the CNC 30 to estimate a disturbance load, thereby detecting collision of the upper nozzle.

The CNC 30, which can adopt an arrangement of the control apparatus for an ordinary servomotor, comprises a processor, a ROM, a RAM, an I/O unit, a display unit and others.

In the wire discharge processing machine having the above arrangement, the method for automatically adjusting the upper nozzle clearance of a wire discharge processing machine in accordance with the present invention is executed in the following manner. First, for positioning the upper nozzle 2, the Z-axis quill shaft 1 is lowered to set the upper nozzle 2 at a reference position of the workpiece 7 or the table 6 etc. Next, the Z-axis quill shaft 1 is raised until a nozzle clearance between the reference position and the upper nozzle 2 is equalized to a set value. With this lifting operation of the Z-axis quill shaft 1, the nozzle clearance of the upper nozzle 2 is adjusted at the set value. The setting of the upper nozzle 2 to the reference position is carried out by detecting collision between the upper nozzle 2 and the workpiece 7 or the table 6. The collision detection is executed by a disturbance estimation observer. When the disturbance estimation observer detects the collision, the lowering movement of the Z-axis quill shaft 2 is stopped. Thus, the clearance adjustment is completed.

Next explained is the arrangement of the disturbance estimation observer, which is used for setting the upper nozzle 2 to the reference position on the workpiece 7 or the table 6 etc.

(Arrangement of Disturbance Estimation Observer)

The arrangement of the disturbance estimation observer used in the method for automatically adjusting an upper nozzle clearance in accordance with the present invention will be explained. In the method for automatically adjusting an upper nozzle clearance of a discharge processing machine in accordance with the present invention, the collision between the upper nozzle 2 and the reference position on the workpiece 7 or the table 6 etc is detected based on the disturbance estimated by the disturbance estimation observer.

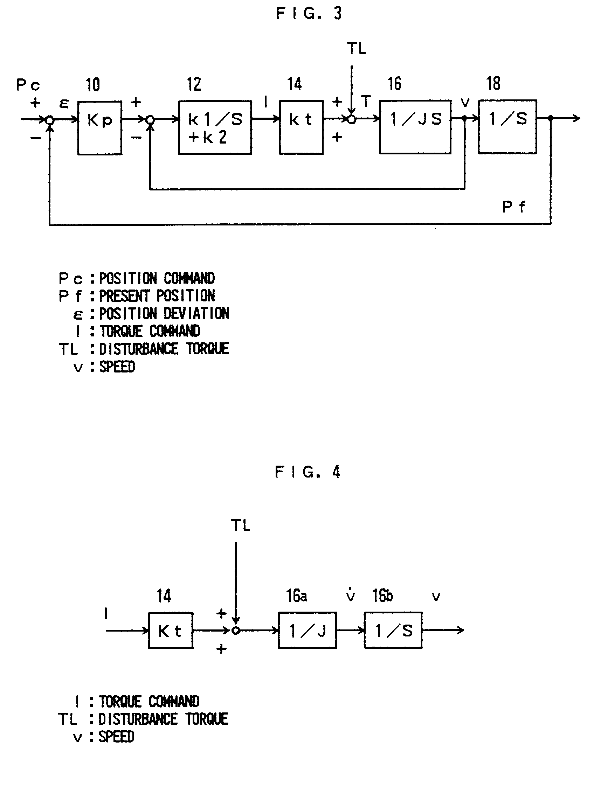

Fig. 3 is a block diagram showing a servomotor system executing a proportional (P) control for position control and also executing a proportional & integral (PI) control for speed control, the block diagram showing the control system for controlling the motor M driving the Z-axis quill shaft 1.

In Fig. 3, kp of a transfer function 10 represents a proportional gain in the position loop control, and a transfer function 12 is a transfer function used for the speed loop control. In the transfer function 12, k1 represents an integral constant and k2 represents a proportional constant. Transfer functions 14 and 16 are transfer functions for the motor. In these transfer functions 14 and 16, kt represents a torque constant and J represents an inertia. A transfer function 18 is a transfer function for calculating position Pf by integrating speed v. TL represents a disturbance torque which is a torque to be generated by collision between the upper nozzle and the workpiece or the table in this invention.

In the block diagram of Fig. 3, a positional deviation $\in$ is obtained by subtracting a position command Pc by a feedback value of a present position Pf. The transfer function 10 obtains a speed command by multiplying the resultant positional deviation $\in$ (= Pc - Pf) with a proportional constant kp. A speed deviation is then obtained based on a difference between thus obtained speed command value and an actual speed v. The transfer function 12 obtains a current value I as a torque command value by applying the PI control to the obtained speed deviation. The current I is supplied to the wiring of the motor, thereby driving the motor.

With supply of current I, the motor rotates at a speed v. The transfer function 18 obtains the position pf by integrating the speed v of the motor.

The disturbance estimation observer is arranged with respect to the servomotor shown in Fig. 3. A conventionally known disturbance observer will be first explained with reference to a digital servo control system executing the servo control of the servomotor by a processor.

Fig. 4 is a block diagram showing a model of an observer object in the servomotor. In the drawing, a reference numeral 14 represents a transfer function of torque constant kt of the servomotor shown in Fig. 3. In Fig. 4, the transfer function 16 shown in fig. 3 is separated into a transfer function 16a of inertia J and an integral term 16b. Furthermore, in Fig. 4, I represents a torque command as an input, v represents the speed, and TL represents the disturbance torque.

In the model shown in the block diagram of Fig. 4, an observer indicated by a reference numeral 50 in Fig. 2 will be obtained if the same dimensional observer estimating the speed v and the disturbance torque TL is constructed using a general method for constituting an observer. The block 50 corresponds to a view showing the arrangement of a disturbance estimation observer.

In terms 52 and 53 in the disturbance estimation observer 50, k3 and k4 represent parameters for the disturbance estimation observer. Furthermore, $\alpha$ shown in a term 51 represents a parameter value to be multiplied with a current value serving as a torque command actually supplied to the servomotor. The factor $\alpha$ is obtained by dividing an estimation value kt* of the torque constant of the motor by an estimation value Jm* of the inertia, according to the relation $\alpha = kt^* / Jm^*$.

A term 54 is an integral term, which integrates the sum of outputs of terms 51, 52 and 53 to obtain an estimation speed va of the motor. A term 55 is a term obtaining an estimated disturbance torque Td2 by multiplying an output of the term 53 with a factor $(1/\alpha)$.

In the block diagram shown in Fig. 2, analysis is given to the disturbance estimation observer 50. In this analysis, it is assumed that $\alpha = kt^* / Jm^*$, the torque constant kt of the motor is equal to its estimation value kt* (i.e. kt = kt*), and the inertial Jm of the motor is equal to its estimation value Jm* (i.e. Jm = Jm*).

Through calculation of term 16, the following equation (1) is obtained.

$$(I \cdot kt + TL)(1/Jm \cdot S) = v \tag{1}$$

Taking account of the output va of the term 54, the following equation (2) is obtained.

$$\{I \cdot (kt/Jm) + (v - va) k3 + (v-va) k4/S)\} \cdot (1/S) = va \tag{2}$$

By modifying the equation (1), the following equation (3) is obtained.

$$I = (v \cdot Jm \cdot S - TL)/kt \tag{3}$$

By rearranging the equation (2) by substituting the equation (3) into the equation (2), the following equation is obtained.

$$(v \cdot Jm \cdot S - TL)/Jm + (v-va) k3 + (v-va)(k4/S) = va \cdot S \tag{4}$$

$$S(v-va) + (v-va) \cdot k3 + (v-va) (k4/S) = TL/Jm \tag{5}$$

If Verr (= v - va) is obtained from the equation (5), the result is as follows.

$$Verr = v-va = (TL/Jm) [1/\{S+k3+(k4/S)\}] \tag{6}$$

From the above equation (6), an output Td1 of the term 53 is expressed by the following equation (7).

$$Td1 = Verr \cdot (k4/S) = (TL/Jm)\{k4/(S^2 + k3 \cdot S + k4)\} \tag{7}$$

If, in the equation (7), the parameters k3 and k4 are selected so as to stabilize poles, it will approximate the equation Td1 = TL/Jm. This approximated equation shows that overall disturbance torque Td1 can be estimated.

Then, in the term 61, the overall disturbance torque Td1 is multiplied with $1/\alpha$ (= Jm* / kt*) to obtain an estimated disturbance torque Td2.

A comparator 62 compares the estimated disturbance torque Td2 with a set value Ts being set for detecting collision. In this comparison, if the estimated disturbance torque Td2 is larger than the set value Ts, it is judged that collision is arisen. Then, the value of the integrator of the speed loop is set "0" while the speed command is set "0" hereinafter, thereby stopping the motor.

The set value Ts used for detecting collision is larger than a static friction value or a weight term in a mechanism section for actuating the Z-axis quill shaft, and is smaller than a breakdown limit of the mechanism section or the workpiece. With this settings, the upper nozzle can be set at the reference position on the workpiece or the table. Furthermore, it is possible to automatically determine the reference point for the nozzle clearance adjustment.

(Operation of the Embodiment of the Present Invention)

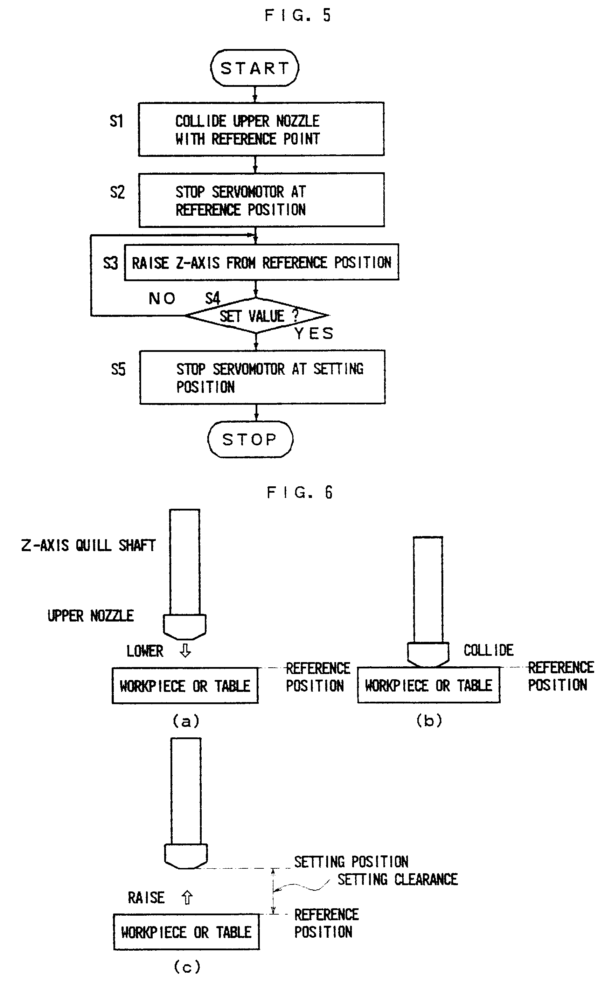

Operation of one embodiment constituted as described above will be explained with reference to Figs. 5 and 6. Fig.

5 is a flow chart illustrating the method for automatically adjusting an upper nozzle clearance of a wire discharge processing machine in accordance with the present invention. Fig. 6 is a view showing the positional relationship between the upper nozzle and the reference position. Hereinafter, the flow chart will be explained using numerals represented in the form of step S.

First, in the wire discharge processing machine, the Z quill shaft 1 is lowered so that the upper nozzle 2 collides with the workpiece 7 or the table 6 etc as shown in Fig. 6(a), thereby setting the upper nozzle 2 at the reference position (Fig. 6(b)).

When the reference position is determined by the workpiece 7, the workpiece 7 is set at the reference position, and then the upper nozzle 2 is collided with the upper surface of the workpiece 7 being thus set.

In the case that the reference position is determined by the table 6, the workpiece 7 is set at an adequate position on the table 6 where the workpiece 7 does not interfere with the Z-axis quill shaft 1 when the Z-axis quill shaft 1 is lowered. Then, the upper nozzle 2 is collided with the upper surface of the table 6 (Step S1).

The collision of the upper nozzle 2 to the reference position in the step S1 is estimated by the disturbance load estimated by the disturbance estimation observer. Then, when the collision is detected by this estimation, the servomotor M is stopped and the upper nozzle 2 stays at the upper nozzle 2 (Fig. 6(b)).

With this step, the upper nozzle 2 is set at the reference position (Step S2).

Next, as shown in Fig. 6(c), the Z-axis quill shaft 1 is raised upward (Step S3).

The lifting operation of the Z-axis quill shaft 1 is continued until the distance of the upper nozzle 2 from the reference position is equalized to the set value of the upper clearance for the upper nozzle 2 (Step S4).

At the time the distance of the upper nozzle 2 from the reference position is equalized to the set value of the upper clearance for the upper nozzle 2, the servomotor M is stopped so that the lifting operation of Z-axis quill shaft 1 is stopped (Step S5).

With this step, the upper nozzle 2 is adjusted from the reference position to the setting position, with a nozzle clearance value equalized to the set value. In cases that an error of the set value of the nozzle clearance needs to be corrected, an error value such as a distortion amount in the Z-axis direction of the Z-axis quill shaft is added to a desirable clearance between the upper nozzle 2 and the workpiece 7.

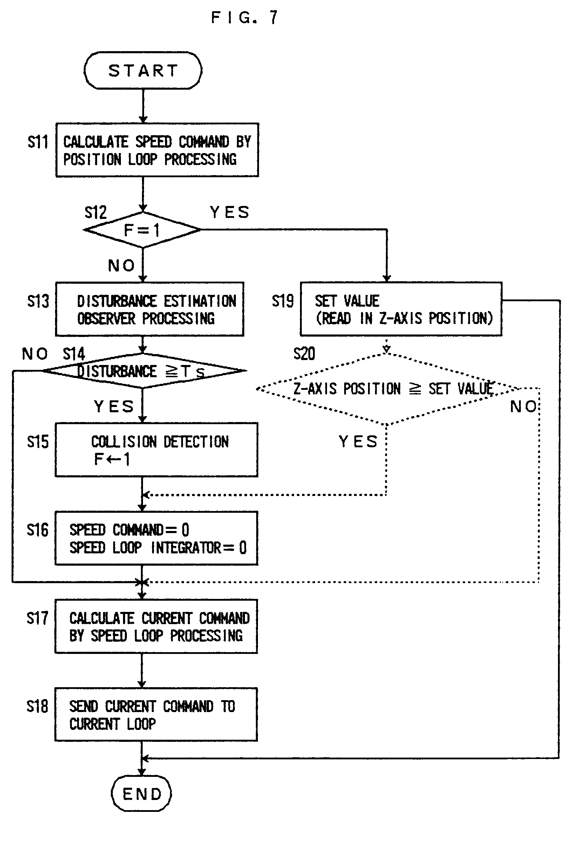

Fig. 7 shows a flow chart explaining an example where a processor of a digital servo (software servo) controlling the servomotor realizes the processing for the automatic adjustment of an upper nozzle clearance of a wire discharge processing machine shown in Fig. 5.

That is, Fig. 7 is a flow chart illustrating the processing of the processor of the digital servo (software servo), executed every cycle of the position & speed loop processing. Hereinafter, the procedure of this flow chart will be explained using numerals represented in the form of step S.

A speed command is obtained by executing the position loop processing based on the position command outputted from the numerically controlled apparatus and a present position data (i.e. a position feedback value) to be detected by a pulse coder or the like installed on the servomotor. This processing is similar to the one conventionally executed (Step S11).

Next, it is judged whether a flag F is "1" or not (Step S12). The flag F, being set to "0" in the initial setting, is kept at "0" unless the upper nozzle 2 collides with the reference point, and is set to "1" after the upper nozzle 2 has collided with the reference point and positioned at the reference position.

If the flag F is not "1" in the judgement of the above step S12, the estimated disturbance torque Td2 is obtained. This estimated disturbance torque Td2 is obtained by executing the processing of the disturbance estimation observer 50 and the blocks 61 and 62 shown in Fig. 2 (Step S13).

Then, it is judged whether the obtained estimated disturbance torque Td2 is larger than the set value Ts being set for detecting the collision (Step S14).

When the estimated disturbance torque Td2 is smaller than the set value Ts, it is considered that the upper nozzle 2 has not yet collided with the reference point. Thus, the lowering operation of the upper nozzle 2 is continued.

The lowering operation of the upper nozzle 2 is executed in the following manner. Using the speed command obtained in the step S11 and an actual speed of the servomotor detected by a speed detector such as a pulse encoder installed on the servomotor, a current command (i.e. torque command) is calculated by the speed loop processing similar to the conventional one. After the current command is sent to the current loop, the processing of the present cycle is finished. Then, the processing of the next cycle is repeated similarly (Steps S17, S18)

On the other hand, when the estimated disturbance torque Td2 calculated in the step S14 is not smaller than the set value Ts, it is considered that the upper nozzle 2 has collided with the reference point on the workpiece 7 or the table 6. Then, the flag F is set to "1", the speed command is set to "0", and the integrator of the speed loop is set to "0", respectively (Steps S15 and S16).

Subsequently, the speed loop processing in the step S17 executes the speed loop processing using the speed command of "0" and the speed loop integrator of "0", thereby obtaining a current command which is sent to the current loop.

As the flag F is being set at "1" from the next cycle, the flow proceeds to the step S17 via the step S12 and a step S19 (Step 20).

In the step S19, the set value representing the setting position of the upper nozzle 2 with respect to the reference position is read in, and the Z-axis quill shaft 1 is driven until it reaches this setting position. The Z-axis quill shaft 1 can be moved to the setting position by executing the following steps. For example, the procedure of step S20, i.e. comparison between the Z-axis position and the set value, and the shift operation of the Z-axis quill shaft 1 are repeated. Then, at the time the Z-axis position finally meets the set value, the speed loop processing is executed using the speed command of "0" and the speed loop integrator of "0", thereby obtaining a current command which is sent to the current loop. In response to the current command, the servomotor is actuated. It is also possible to directly actuate the motor to move it to the set value without using the step S20.

This set value can be corrected by adding an error value such as a distortion amount in the Z axis to the distance between the upper nozzle and the reference position. This set value can be stored in a memory means together with the parameters of the CNC 30.

Accordingly, as described above, the position of the upper nozzle can be adjusted at the predetermined setting position so as to maintain a desired nozzle clearance with respect to the reference position. Furthermore, by selecting the set value, the nozzle clearance can be arbitrarily varied.

Next, a development of the present invention will be explained. This development is intended to correct the adverse effect induced by liquid pressure of machining fluid supplied from the upper nozzle.

After the upper nozzle is positioned at the predetermined setting position, if machining fluid is supplied and injected toward the workpiece, the upper nozzle will receive a counter pressure acting in a direction opposite to the workpiece in the Z axis due to injected machining fluid. Hence, there is the possibility that the setting position of the upper nozzle may be dislocated from the intended position.

Hence, in the upper nozzle clearance adjusting method of the present development, an error due to pressure of machining fluid is corrected in the following manner. A disturbance load value is detected beforehand under the condition that machining fluid is supplied to the upper nozzle when the upper nozzle clearance is set at the setting position. Then, the shift control of the Z-axis quill shaft is executed in such a manner that an estimated disturbance load value calculated by the disturbance estimation of the servomotor is equalized to the detected disturbance load value.

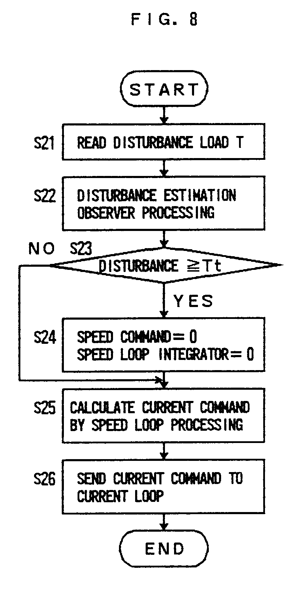

Hereinafter, this development of the present invention will be explained with reference to the flow chart shown in Fig. 8. This flow chart only shows the additional flow succeeding the steps shown by the flow charts of Figs. 5 and 7 on the assumption that the upper nozzle is always positioned at the setting position.

First, the upper nozzle clearance is adjusted to set the upper nozzle at the setting position under the condition that pressure is generated by the machining fluid. Then, a disturbance load is obtained. The obtained disturbance load value Tt should be obtained in advance based on various machining conditions before starting a machining operation of the wire discharge processing machine. This disturbance load value Tt can be obtained by the disturbance estimation observer. The obtained value can be stored in the memory means in the CNC. Another memory means other than the memory means in the CNC can be used as memory means storing the disturbance load value.

Subsequently, the upper nozzle is positioned at the setting position by the position adjustment shown by the flow charts of Figs. 5 and 7. Thereafter, if machining fluid is supplied into the upper nozzle, the upper nozzle is dislocated in the Z-axis direction due to pressure of machining fluid. Thus, an error is produced on the upper nozzle clearance.

Hence, read out first is the disturbance load value Tt which is obtained beforehand and stored in the memory means (Step S21). Next, a disturbance load is estimated by the disturbance estimation observer by executing the processing of the disturbance observer 50 and the blocks 61, 62 shown in Fig. 2 (Step S22). Then, it is judged whether the estimated disturbance load thus obtained is not smaller than the disturbance load value Tt (Step S23).

The upper nozzle is dislocated in the direction increasing the upper nozzle clearance along the Z axis due to machining fluid supplied. Therefore, the estimated disturbance load is smaller than the memorized disturbance load value Tt.

Accordingly, in the judgement of the step S23, it is judged that the estimated disturbance load is smaller than the disturbance load value Tt. The flow thus proceeds to a step S25 to lower the upper nozzle 2.

This lowering operation of the upper nozzle 2 is executed in the following manner. A speed loop processing is first executed on the basis of the speed command obtained in the step S11 and the actual speed detected by the speed detector such as a pulse coder or the like installed on the servomotor, to calculate a current command (torque command) in the same manner as in the conventional system. The current command thus obtained is supplied to the current loop, and the processing of the present cycle is terminated. Then, the processing of the next cycle is repeated similarly (Steps S25 and S26).

On the other hand, when the estimated disturbance load is not smaller than the disturbance load value Tt, it is judged in the step S23 that the upper nozzle 2 has reached the predetermined upper nozzle clearance. Then, the speed command is set to "0" and the integrator of the speed loop is set to "0" (Step S24). Subsequently, in the speed loop processing of the steps S25 and S26, a current command is obtained by executing the speed loop processing with the speed command of "0" and the speed loop integrator of "0". The obtained current command is sent to the current loop.

With the above steps, it becomes possible to execute the clearance adjustment capable of correcting an error generated due to pressure of machining fluid supplied into the upper nozzle.

(Modified Embodiment)

In the above described embodiment, the positioning setting of the upper nozzle to the reference position is executed using the disturbance estimation observer for detecting collision between the upper nozzle and the workpiece or the table. It is however possible to use, instead of the upper nozzle, a portion having constant positional relationship with the upper nozzle in the Z-axis direction, or to use, instead of the workpiece or the table, a portion keeping unchanged position with respect to the shift movement of the upper nozzle in the Z-axis direction. The collision between these substitutions can be utilized for the positional settings of the upper nozzle to the reference position.

As explained in the foregoing description, the present invention provides an automatic adjustment of the upper nozzle clearance in a wire discharge processing machine capable of automatically adjusting the upper nozzle clearance without requiring manual measurements using clearance gauges or the like.

## Claims

1.  A method of automatically adjusting an upper nozzle clearance of a wire discharge processing machine comprising an upper nozzle (2) installed on a Z axis driven by a servomotor (M), a wire passing through said upper nozzle (2) and a drive control system for said servomotor (M),
    the method comprising:

    a step of stopping said servomotor (M) when said upper nozzle (2) is positioned at a reference position; and
    a step of, after finishing the positioning of said upper nozzle (2) at said reference position, raising said Z axis by a set value corresponding to an upper nozzle clearance to determine a position of the upper nozzle (2) with respect to said reference position, thereby adjusting a clearance of the upper nozzle (2) so as to be equalised to an arbitrarily determined value;
    characterised in that said servomotor drive control system comprises a disturbance estimation observer (50), and said reference position for the upper nozzle (2) is obtained by using said disturbance estimation observer (50) for detecting collision between a reference point and said upper nozzle (2), or between a reference point and a portion having constant positional relationship with the upper nozzle (2) in the Z axis direction, the servomotor (M) being stopped in response to the detection of said collision by said disturbance estimation observer (50).

2.  The method of automatically adjusting an upper nozzle clearance of a wire discharge processing machine defined by claim 1 wherein, when machining fluid is supplied into said upper nozzle (2), the positioning of said upper nozzle (2) with respect to the reference position is executed by comparing a disturbance load value estimated by said disturbance estimation observer (50) with the set value obtained in advance.

3.  The method of automatically adjusting an upper nozzle clearance of a wire discharge processing machine defined by claim 1 or 2, wherein said reference position is defined on one of a workpiece (7), a table (6), and a stationary portion of said wire discharge processing machine.

4.  The method of automatically adjusting an upper nozzle clearance of a wire discharge processing machine defined by any one of the preceding claims, wherein said set value corresponding to said upper nozzle clearance is obtained by adding an error value to a predetermined clearance between said upper nozzle (2) and said reference position.

5.  The method of automatically adjusting an upper nozzle clearance of a wire discharge processing machine defined by claim 4, wherein said error value is a distortion amount in the Z-axis direction.

6.  The method of automatically adjusting an upper nozzle clearance of a wire discharge processing machine defined by claim 1, further comprising:

    a step of obtaining a disturbance load when said upper nozzle (2) is positioned at a setting position under a condition that machining fluid is supplied into the upper nozzle (2);
    wherein a shift control of said Z axis is executed in such a manner that the disturbance load obtained in the above step meets a disturbance load estimated by said disturbance estimation observer (50).

**Patentansprüche**

1. Verfahren zur automatischen Abstandseinstellung des oberen Mundstücks einer elektrischen Entladungsdrahtschneidemaschine, die ein oberes Mundstück (2), das auf einer mittels eines Servomotors (M) angetriebenen Z-Achse angeordnet ist, einen Draht, der durch das obere Mundstück (2) verläuft, und ein Triebregelsystem für den Servomotor (M) enthält, welches Verfahren umfaßt:

   einen Schritt zum Stoppen des Servomotors (M), wenn das obere Mundstück (2) in einer Referenzposition positioniert ist, und
   einen Schritt nach der Beendigung der Positionierung des oberen Mundstücks (2) in der Referenzposition zum Hochlegen der Z-Achse um einen gesetzten Wert, der einem Abstand des oberen Hundstücks entspricht, um eine Position des oberen Mundstücks (2) in bezug auf die Referenzposition zu bestimmen, um dadurch einen Abstand des oberen Hundstücks (2) derart einzustellen, daß er gleich einem willkürlich bestimmten Wert wird,
   dadurch **gekennzeichnet,** daß das Servomotor-Triebregelsystem eine Störungsabschätzungs-Beobachtungseinrichtung (50) enthält und die Referenzposition für das obere Mundstück (2) unter Benutzung der Störungsabschätzungs-Beobachtungseinrichtung (50) zur Erfassung einer Kollision zwischen einem Referenzpunkt und dem oberen Mundstück (2) oder zwischen einem Referenzpunkt und einem Teil, der eine positionsmäßige Beziehung zu dem oberen Mundstück (2) in der Z-Achsenrichtung hat, gewonnen wird, wobei der Servomotor (M) in Reaktion auf die Erfassung der Kollision mittels der Störungsabschätzungs-Beobachtungseinrichtung (50) gestoppt wird.

2. Verfahren zur automatischen Abstandseinstellung des oberen Mundstücks einer elektrischen Entladungsdrahtschneidemaschine nach Anspruch 1, bei dem wenn Bearbeitungsflüssigkeit in das obere Mundstück (2) eingeleitet wird, die Positionierung des oberen Mundstücks (2) in bezug auf die Referenzposition durch Vergleichen eines Störungsbelastungswerts, der mittels der Störungsabschätzungs-Beobachtungseinrichtung (50) abgeschätzt ist, mit dem gesetzten Wert, der vorab gewonnen ist, ausgeführt wird.

3. Verfahren zur automatischen Abstandseinstellung des oberen Mundstücks einer elektrischen Entladungsdrahtschneidemaschine nach Anspruch 1 oder 2, bei dem die Referenzposition auf einem von Teilen, nämlich einem Werkstück (7), einem Tisch (6) oder einem stationären Teil der elektrischen Entladungsdrahtschneidemaschine, definiert wird.

4. Verfahren zur automatischen Abstandseinstellung des oberen Hundstücks einer elektrischen Entladungsdrahtschneidemaschine nach einem der vorhergehenden Ansprüche, bei dem der gesetzte Wert, welcher dem Abstand des oberen Mundstücks entspricht, durch Addieren eines Fehlerwerts zu einem vorbestimmten Abstand zwischen dem oberen Mundstück (2) und der Referenzposition gewonnen wird.

5. Verfahren zur automatischen Abstandseinstellung des oberen Hundstücks einer elektrischen Entladungsdrahtschneidemaschine nach Anspruch 4, bei dem der Fehlerwert ein Fehlerbetrag in der Z-Achsenrichtung ist.

6. Verfahren zur automatischen Abstandseinstellung des oberen Mundstücks einer elektrischen Entladungsdrahtschneidemaschine nach Anspruch 1, das ferner einen Schritt umfaßt

   zum Gewinnen einer Störungsbelastung, wenn das obere Mundstück (2) unter einer Bedingung, daß Bearbeitungsflüssigkeit in das obere Mundstück (2) eingeleitet wird, in einer Einstellposition positioniert ist,
   wobei eine Verschiebesteuerung der Z-Achse in einer Weise ausgeführt wird, daß die Störungsbelastung, welche in dem zuvor genannten Schritt gewonnen wird, einer Störungsbelastung entspricht, die mittels der Störungsabschätzungs-Beobachtungseinrichtung (50) abgeschätzt ist.

**Revendications**

1. Procédé pour le réglage automatique de la largeur d'admission de la tuyère supérieure d'une machine d'étincelage à l'aide d'un fil, comprenant une tuyère supérieure (2) montée sur un axe des Z entraîné par un servomoteur (M), un fil passant à travers ladite tuyère supérieure (2), et un système de commande d'entraînement pour ledit servomoteur (M), ledit procédé comprenant:

une étape consistant à arrêter ledit servomoteur (M) lorsque ladite tuyère supérieure (2) se trouve à une position de référence; et

une étape consistant à, une fois que ladite tuyère supérieure (2) se trouve à ladite position de référence, élever ledit axe des Z d'une valeur de consigne correspondant à la largeur d'admission de la tuyère supérieure pour déterminer une position de la tuyère supérieure (2) par rapport à ladite position de référence, en réglant ainsi une largeur d'admission de la tuyère supérieure (2) de façon à la rendre égale à une valeur déterminée de manière arbitraire;

caractérisé en ce que ledit système de commande d'entraînement du servomoteur comprend un estimateur-observateur de perturbation (50) et ladite position de référence pour la tuyère supérieure (2) est obtenue en utilisant ledit estimateur-observateur de perturbation (50) pour détecter une collision entre un point de référence et ladite tuyère supérieure (2) ou entre un point de référence et une portion se trouvant en relation de positionnement constante avec la tuyère supérieure (2) dans la direction de l'axe des Z, le servomoteur (M) étant arrêté en réponse à la détection de ladite collision par ledit estimateur-observateur de perturbation (50).

2. Procédé pour le réglage automatique de la largeur d'admission de la tuyère supérieure d'une machine d'étincelage à l'aide d'un fil, défini à la revendication 1, dans lequel, lorsque du fluide d'usinage est alimenté dans ladite tuyère supérieure (2), on réalise le positionnement de ladite tuyère supérieure (2) par rapport à la position de référence en comparant une valeur de charge de perturbation estimée par ledit estimateur-observateur de perturbation (50) avec la valeur de consigne préétablie.

3. Procédé pour le réglage automatique de la largeur d'admission de la tuyère supérieure d'une machine d'étincelage à l'aide d'un fil, défini à la revendication 1 ou 2, dans lequel, ladite position de référence est définie, soit sur la pièce à usiner (7), soit sur la table (6) ou encore sur la portion stationnaire de ladite machine d'étincelage à l'aide d'un fil.

4. Procédé pour le réglage automatique de la largeur d'admission de la tuyère supérieure d'une machine d'étincelage à l'aide d'un fil, défini dans l'une quelconque des revendications précédentes, dans lequel ladite valeur de consigne correspondant à ladite largeur d'admission de la tuyère supérieure est obtenue en additionnant une valeur d'erreur à une largeur d'admission prédéterminée entre ladite tuyère supérieure (2) et ladite position de référence.

5. Procédé pour le réglage automatique de la largeur d'admission de la tuyère supérieure d'une machine d'étincelage à l'aide d'un fil, défini à la revendication 4, dans lequel ladite valeur d'erreur est une ampleur de distorsion dans la direction de l'axe des Z.

6. Procédé pour le réglage automatique de la largeur d'admission de la tuyère supérieure d'une machine d'étincelage à l'aide d'un fil, défini à la revendication 1, comprenant en outre:

une étape consistant à obtenir une charge de perturbation lorsque ladite tuyère supérieure (2) se trouve à une position correspondant à la condition telle que du fluide d'usinage alimente la tuyère supérieure (2);

dans lequel on réalise une commande de décalage dudit axe des Z de telle sorte que la charge de perturbation obtenue dans l'étape ci-dessus correspond à une charge de perturbation estimée par ledit estimateur-observateur de perturbation (50).

FIG. 1

FIG. 2

FIG. 3

Pc : POSITION COMMAND
Pf : PRESENT POSITION
ε : POSITION DEVIATION
I : TORQUE COMMAND
TL : DISTURBANCE TORQUE
v : SPEED

FIG. 4

I : TORQUE COMMAND
TL : DISTURBANCE TORQUE
v : SPEED

FIG. 5

```
          ( START )
             │
   S1  ┌──────────────────────┐
       │ COLLIDE UPPER NOZZLE │
       │ WITH REFERENCE POINT │
       └──────────────────────┘
             │
   S2  ┌──────────────────────┐
       │ STOP SERVOMOTOR AT   │
       │ REFERENCE POSITION   │
       └──────────────────────┘
             │
   S3  ┌────────────────────────────────────┐
   ┌──►│ RAISE Z-AXIS FROM REFERENCE POSITION│
   │   └────────────────────────────────────┘
   │         │
   │    NO  S4 ◇ SET VALUE ?
   └─────────      │ YES
             ┌──────────────────────┐
   S5        │ STOP SERVOMOTOR AT   │
             │ SETTING POSITION     │
             └──────────────────────┘
                    │
                 ( STOP )
```

FIG. 6

Z-AXIS QUILL SHAFT

UPPER NOZZLE

LOWER ⇩

WORKPIECE OR TABLE ---- REFERENCE POSITION

(a)

COLLIDE

WORKPIECE OR TABLE ---- REFERENCE POSITION

(b)

SETTING POSITION
SETTING CLEARANCE

RAISE ⇧

WORKPIECE OR TABLE ---- REFERENCE POSITION

(c)

FIG. 7

```
                    ┌─────────────┐
                    │    START    │
                    └──────┬──────┘
                           │
       S11 ┌───────────────────────────────┐
           │ CALCULATE SPEED COMMAND BY     │
           │ POSITION LOOP PROCESSING       │
           └───────────────┬───────────────┘
                           │
       S12                 │         YES
           ╱─────────────────╲─────────────────────────────┐
           ╲     F = 1       ╱                              │
            ╲───────┬───────╱                               │
                    │ NO                                     │
       S13 ┌───────────────────────┐   S19 ┌──────────────────────────────┐
           │ DISTURBANCE ESTIMATION │      │ SET VALUE                      │
           │ OBSERVER PROCESSING    │      │ (READ IN Z-AXIS POSITION)      │
           └───────────┬───────────┘      └───────────────┬──────────────┘
      NO  S14          │                   S20             │
        ╱─────────────────╲               ╱──────────────────────────────╲
        ╲ DISTURBANCE ≧ Ts ╱              ╲ Z-AXIS POSITION ≧ SET VALUE   ╱  NO
         ╲───────┬────────╱                ╲──────────────┬──────────────╱
                 │ YES                        YES          │
       S15 ┌──────────────────┐                            │
           │ COLLISION DETECTION │                          │
           │ F ← 1              │                           │
           └────────┬─────────┘                            │
                    │                                       │
       S16 ┌──────────────────────┐                         │
           │ SPEED COMMAND = 0     │                         │
           │ SPEED LOOP INTEGRATOR = 0 │                     │
           └──────────┬───────────┘                         │
                      │                                      │
       S17 ┌──────────────────────┐                          │
           │ CALCULATE CURRENT COMMAND │                      │
           │ BY SPEED LOOP PROCESSING  │                      │
           └──────────┬───────────┘                          │
                      │                                       │
       S18 ┌──────────────────────┐                           │
           │ SEND CURRENT COMMAND TO │                         │
           │ CURRENT LOOP            │                          │
           └──────────┬───────────┘                           │
                      │                                        │
                    ┌─────────┐                                │
                    │   END   │◄───────────────────────────────┘
                    └─────────┘
```

FIG. 8

START

S21 | READ DISTURBANCE LOAD T

S22 | DISTURBANCE ESTIMATION OBSERVER PROCESSING

NO S23 DISTURBANCE ≧ Tt

YES

S24 | SPEED COMMAND = 0
SPEED LOOP INTEGRATOR = 0

S25 | CALCULATE CURRENT COMMAND BY SPEED LOOP PROCESSING

S26 | SEND CURRENT COMMAND TO CURRENT LOOP

END